# EUROPÄISCHE PATENTSCHRIFT

(11) **EP 3 690 616 B1**
(45) Veröffentlichungstag und Bekanntmachung des Hinweises auf die Patenterteilung: **13.08.2025**
(21) Anmeldenummer: 19210495.8
(22) Anmeldetag: 21.11.2019
(51) Int. Cl.: G06F 3/03, G06F 3/01, G05B 19/418, G06F 3/042

(54) **SYSTEM UND VERFAHREN MIT EINEM VIRTUELLEN SCHALTER**
SYSTEM AND METHOD WITH A VIRTUAL SWITCH
SYSTÈME ET PROCÉDÉ DOTÉS D'UN COMMUTATEUR VIRTUEL

(30) Priorität: 29.01.2019 DE 102019102151
(43) Veröffentlichungstag der Anmeldung: 05.08.2020
(73) Patentinhaber: IGZ Ingenieurgesellschaft für logistische Informationssysteme mbH, 95685 Falkenberg (DE)
(72) Erfinder: ZRENNER, Johann, 95685 Falkenberg (DE)
(74) Vertreter: Strehl & Partner mbB

(56) Entgegenhaltungen:
- EP-A2- 1 505 350
- DE-A1- 102014 225 927
- SHIM JINWOOK ET AL: "Interactive features based augmented reality authoring tool", 2014 IEEE INTERNATIONAL CONFERENCE ON CONSUMER ELECTRONICS (ICCE), IEEE, 10 January 2014 (2014-01-10), pages 47 - 50, XP032582048, ISSN: 2158-3994, [retrieved on 20140319], DOI: 10.1109/ICCE.2014.6775902
- IHSAN RABBI ET AL: "Analysing the attributes of fiducial markers for robust tracking in augmented reality applications", INTERNATIONAL JOURNAL OF COMPUTATIONAL VISION AND ROBOTICS, vol. 7, no. 1/2, 1 January 2017 (2017-01-01), pages 68 - 82, XP055683048, ISSN: 1752-9131, DOI: 10.1504/IJCVR.2017.081238

## Beschreibung

### Gebiet der Erfindung

Die Erfindung betrifft ein System mit einer kamerabasierten Benutzerschnittstelle nach dem Oberbegriff des Anspruchs 1.

### Stand der Technik

Im Stand der Technik sind verschiedene Arten von Bedienvorrichtungen für technische Systeme wie Fahrzeuge, Maschinen oder elektronische Geräte bekannt. Neben den herkömmlichen Bedienvorrichtungen mit Schaltern, Tasten, Drehknebeln und dergleichen mechanischen Bedienelementen sind seit einigen Jahren auch so genannte Touch Controls mit berührungs- oder annäherungsempfindlichen Bedienelementen bekannt.

Dabei kann für jeden einstellbaren Parameter oder zum Auslösen jeder Funktion des Systems ein eigenes mechanisches bzw. berührungs- oder annäherungsempfindliches Bedienelement vorgesehen sein.

Ferner hinaus sind auch Geräte mit einer Gestensteuerung bekannt, bei denen der Benutzer das Gerät durch Ausführen von Gesten im freien Raum (im Allgemeinen zumindest in der Nähe des zu steuernden Geräts) bedienen kann. Für eine solche Gestensteuerung können zum Beispiel Bildverarbeitungssysteme mit einer oder mehreren Kameras eingesetzt werden. Die EP 1 352 301 B1 offenbart ein Verfahren zum Steuern von Geräten, bei welchem ein Bedienelement holografisch in den Aktionsbereich eines Bedieners projiziert wird und eine Bewegung des Bedieners in Richtung des virtuellen Bedienelements mittels einer 3D-Kamera erfasst wird.

Aus der DE 10 2014 225 927 A1 ist ein System nach dem Oberbegriff des Anspruchs 1 bekannt, welches zum Steuern von Funktionen eines Kraftfahrzeugs verwendet werden soll. Überwachte Bereiche werden mit einer Wärmekamera überwacht. Eine Markierung, die den überwachten Bereich des virtuellen Schalters für den Benutzer erkennbar macht, wird auf eine Fläche im Fahrgastraum projiziert oder kann als Aufkleber ausgestaltet sein.

Ferner ist es bekannt, als Benutzerschnittstelle für Computer sogenannte virtuelle Tastaturen bereitzustellen, in denen eine Vielzahl von überwachten Bereichen definiert werden, die jeweils einer Taste einer Tastatur zugeordnet sind. Auch hier erfolgt das Erkennbar machen der Tasten durch Projektion.

Sowohl die Ausgestaltung der Markierung als Projektion als auch die Ausgestaltung als Aufkleber haben Nachteile. Projektionen können in hellem Licht schlecht erkennbar sein und zu diesem Zweck eingesetzte Laser können Augenschäden verursachen. Die Position von Aufklebern oder Lackierungen ist nicht zerstörungsfrei veränderbar.

Aus der EP 1505350 A2 ist ein Kochfeld mit einem frei positionierbaren Bedienfeld mit mehreren Bedienflächen bekannt, wobeiin Ausgestaltung der Erfindung die Anordnung der Bedienflächen auf dem Bedienfeld vom Benutzer individuell zusammengestellt werden kann und/oder den Bedienflächen wählbare Funktionen zugeordnet werden können.

### Zusammenfassung der Erfindung

Der Erfindung liegt die Aufgabe zugrunde, ein System der gattungsgemäßen Art bereitzustellen, in dem die Position der virtuellen Schaltflächen vom Benutzer flexibel wählbar ist und das in der Industrie an Arbeitsplätzen in der Fertigung (z.B. Montage oder Maschinenarbeitsplätze) oder in der Logistik (z.B. Wareneingangs-, Kommissionier- oder Verpackungsarbeitsplätze) genutzt werden kann. Andere Einsatzbereichen wie Fahrzeuge, Haushaltsgeräte und/oder Spiele-Computer liegen außerhalb des beanspruchten Bereichs.

Die Aufgabe wird gelöst durch ein System mit den Merkmalen des Anspruchs 1. Vorteilhafte Ausgestaltungen der Erfindung ergeben sich aus den Unteransprüchen.

Die Erfindung betrifft ein System mit wenigstens einer Kamera, einem Steuerungscomputer zum Auswerten der von der Kamera erfassten Bilddaten und wenigstens einem virtuellen Schalter, wobei der virtuelle Schalter einen überwachten Bereich im Blickfeld der Kamera und eine für einen Benutzer sichtbare Markierung zum erkennbar machen des überwachten Bereichs umfasst, und der Steuerungscomputer dazu ausgelegt ist, einen Benutzereingriff in den überwachten Bereich zu detektieren und eine Aktion oder einen Prozess auszulösen, wenn ein Benutzereingriff detektiert wurde.

Die Markierung auf dem virtuellen Schalter kann insbesondere aus zwei Elementen bestehen:
- Einem Funktionssymbol (z. B. Pfeil, oder Diskette) durch welches der Benutzer erkennen kann, welche Funktion er durch Drücken des virtuellen Schalters auslöst; und
- Einer Codierung in Form eines AR-Markers, QR-Codes oder vergleichbarem, womit über die Bilderkennung erkannt werden kann, ob es sich um einen virtuellen Schalter handelt und welche Funktion damit verbunden ist. Des Weiteren kann so der Erfassungsbereich über Position der Codierung des virtuellen Schalters ermittelt werden.

Die Kamera ist erfindungsgemäß eine 3D- oder Time-of-Flight (TOF)- Kamera.

Je nach den Umständen kann die Aktion oder der Prozess sofort nach dem detektierten Eingriff ausgelöst werden oder dann, wenn der Eingriff über eine vorgegebene Mindest-Zeitspanne detektiert wurde. Ferner kann, je nach Einsatzbereich, jeder im überwachten Bereich detektierte Gegenstand als Eingriff gewertet werden oder die Bildverarbeitung kann weitere Prozesse zum Unterscheiden einer Hand von anderen Gegenständen oder sogar zum Detektieren einer bestimmten Geste der Hand durchführen und nur dann die Aktion oder den Prozess auslösen, wenn eine Hand oder eine Geste im überwachten Bereich detektiert wurde.

Nach der Erfindung wird vorgeschlagen, dass die Markierung permanent auf einem Trägerkörper angebracht ist, der vom Benutzer zwischen mehreren wählbaren Positionen im Blickfeld der Kamera bewegbar ist und der Steuerungscomputer dazu ausgelegt ist, die Position der Markierung aus den Bilddaten zu ermitteln und eine Position und/oder Größe des überwachten Bereichs abhängig von der ermittelten Position der Markierung zu bestimmen.

Der Benutzer kann dadurch die Position der virtuellen Schaltflächen ergonomisch nach seinen Bedürfnissen wählen und seinen Arbeitsplatz oder seine Steuerungskonsole nach seinen Wünschen frei gestalten. Ein Linkshänder kann beispielsweise häufig verwendete Schaltflächen links positionieren, während ein Rechtshänder die gleiche Schaltfläche rechts positionieren würde. Auch eine Positionierung abhängig von der Größe oder abhängig von Vorlieben des Benutzers ist möglich. Im Unterschied zu Projektionen kann die Markierung nicht durch Schatten verschwinden und kann durch einen geeignete Drucktechnik robust und in allen Lichtverhältnissen sichtbar sein.

Im Falle einer 3D-Kamera ist der überwachte Bereich ein Bereich im dreidimensionalen Raum, der von dem Steuerungscomputer vorzugsweise so bestimmt wird, dass seine Position in unmittelbarer Nähe der Markierung, vorzugsweise oberhalb der Markierung und mittig zu dieser angeordnet ist. Hier bezieht sich "oberhalb" auf eine Richtung Senkrecht zu einer Hauptebene des Trägerkörpers.

Die Erfindung ist für eine Vielzahl von Systemen einsetzbar, insbesondere für Fertigungs- oder Logistikarbeitsplätze (z.B. Kommissionierung, Wareneingang, Versand), Steuerungskonsolen für Maschinen, Anlagen oder Fahrzeuge oder auch für Haushaltsgeräte oder Spiele-Computer.

Der Trägerkörper ist vorzugsweise plättchen- oder kachelförmig und in einer bevorzugten Ausgestaltung der Erfindung aus Kunststoff oder Metall ausgebildet.

Ferner wird vorgeschlagen, dass die Markierung ein maschinenlesbares Symbol oder einen maschinenlesbaren Code umfasst und der Steuerungscomputer dazu ausgelegt ist, das Symbol oder den Code der Markierung aus den Bilddaten zu ermitteln, abhängig von dem ermittelten Symbol oder Code eine dem virtuellen Schalter zugeordnete Funktion zu bestimmen und ein der Funktion entsprechendes die Aktion oder den Prozess auszulösen, wenn ein Benutzereingriff in den überwachten Bereich des virtuellen Schalters detektiert wurde. Beispielsweise könnte eine Markierung in Form eines grünen Pfeils der Funktion "Weiterschalten zum nächsten Schritt im Workflow" zugeordnet sein. Wenn der Benutzer den Trägerkörper mit sichtbarer Markierung an eine bestimmte Stelle legt, wird ein Raumbereich in unmittelbarer Nähe der Markierung dieser Funktion zugeordnet und die Funktion "Weiterschalten zum nächsten Schritt im Workflow" wird ausgeführt, sobald der Benutzer in diesen Raumbereich eingreift.

Der Trägerkörper kann lose auf einen Tisch oder eine Konsole gelegt werden oder er kann an seiner Rückseite Mittel zum lösbaren Befestigen des Trägerkörpers an der Konsole oder am Arbeitsplatz im Blickfeld der Kamera umfassen, wobei die Mittel zum lösbaren Befestigen des Trägerkörpers einen Magneten oder einen Klettverschluss können. Alternativ oder ergänzend dazu kann eine Konsole oder einen Arbeitsplatz mit Befestigungsstrukturen zum lösbaren Befestigen des Trägerkörpers ausgestattet sein, beispielswiese mit Vertiefungen oder Halterungen zum Einsetzen oder Einlegen des Trägerkörpers. Dadurch kann ein versehentliches Verschieben des Trägerkörpers vermieden werden und eine Befestigung auch an schrägen oder vertikalen Flächen wird möglich.

Ferner wird vorgeschlagen, dass der Steuerungscomputer dazu ausgelegt ist, das System in mehreren Betriebsmodi zu betreiben und den Betriebsmodus abhängig von aus den Bilddaten detektieren Markierungen auszuwählen. Wenn es an einem Fertigungsarbeitsplatz beispielsweise die Betriebsmodi "Automatik" und "Manuell" gibt, kann der Benutzer einen Trägerkörper mit der Markierung "Automatik" in das Blickfeld der Kamera legen, die dann die Markierung detektiert und den Arbeitsplatz in den Automatik-Modus schaltet. Wird die Markierung entfernt, wird der Arbeitsplatz entsprechend in den Manuell-Betrieb geschaltet. Die letztgenannte bildbasierte Steuerung des Systems erfordert keine Detektion eines Eingriffs in einen überwachten Bereich sondern nur die Detektion des Vorhandenseins der Markierungen.

In einer Ausgestaltung der Erfindung umfasst das System eine graphische Benutzerschnittstelle für einen Arbeitsplatzdialog, wobei der Steuerungscomputer dazu ausgelegt ist eine Übersicht von über die Benutzerschnittstelle auslösbaren Funktionen darzustellen, wobei Funktionen, die der Steuerungscomputer einem virtuellen Schalter zugeordnet hat, in der Übersicht ausgeblendet sind. Der Benutzer kann dann wählen, ob er bestimmte Funktionen über den Arbeitsplatzdialog per Maus oder Bildschirm-Touch steuert oder über virtuelle Schaltflächen der erfindungsgemäßen Art.

Ferner wird vorgeschlagen, dass der Steuerungscomputer dazu ausgelegt ist, das System in einem Teaching-Betriebsmodus zu betreiben, in dem der Benutzer eine Markierung mit einer Funktion verknüpfen kann.

Ein weiterer Aspekt der Erfindung betrifft ein computergestütztes Verfahren zum Erstellen eines virtuellen Schalters in einem System der oben beschriebenen Art. Das Verfahren umfasst insbesondere die Schritte des Positionierens eines Trägerkörpers mit permanent darauf angebrachter Markierung in einer von mehreren wählbaren Positionen im Blickfeld der Kamera durch einen Benutzer, des Ermittelns der Position der Markierung aus den Bilddaten durch den Steuerungscomputer; und des Bestimmens einer Position und/oder Größe des überwachten Bereichs abhängig von der ermittelten Position der Markierung durch den Steuerungscomputer.

In einer vorteilhaften Ausgestaltung der Erfindung umfasst die Markierung ein maschinenlesbares Symbol oder einen maschinenlesbaren Code und das Verfahren umfasst ferner die Schritte des Ermittelns des Symbols oder des Codes der Markierung aus den Bilddaten, des Bestimmens einer dem virtuellen Schalter zugeordnete Funktion abhängig von dem ermittelten Symbol oder Code; und des Auslösens einer der Funktion entsprechenden Aktion oder eines der Funktion entsprechenden Prozesses, wenn ein Benutzereingriff in den überwachten Bereich des virtuellen Schalters detektiert wurde.

Weitere Merkmale und Vorteile ergeben sich aus der folgenden Figurenbeschreibung. Die gesamte Beschreibung, die Ansprüche und die Figuren offenbaren Merkmale der Erfindung in speziellen Ausführungsbeispielen und Kombinationen.

### Kurze Beschreibung der Figuren

Es zeigen:
Fig. 1 ein System nach einem ersten Ausführungsbeispiel der Erfindung;
Fig. 2 einen Ausschnitt eines Arbeitsplatzes nach dem ersten Ausführungsbeispiel der Erfindung mit mehreren Trägerelementen mit Markierungen; und
Fig. 3 ein Ablaufdiagramm eines Verfahrens zum Erstellen eines virtuellen Schaltelements nach einem Ausführungsbeispiel der Erfindung.

### Beschreibung eines Ausführungsbeispiels

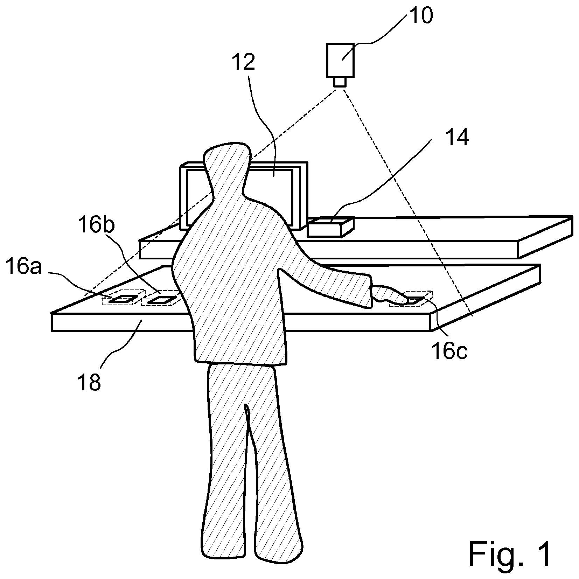

Figur 1 zeigt ein System nach einem ersten Ausführungsbeispiel der Erfindung.

Das System ist ein Montagearbeitsplatz mit einer Kamera 10, einem Display 12 zum Darstellen eines Arbeitsplatzdialogs, einem Steuerungscomputer 14 zum Auswerten der von der Kamera 10 erfassten Bilddaten und mit mehreren virtuellen Schaltern 16a - 16c.

Der Arbeitsplatz umfasst einen Arbeitstisch 18 zum Aufstellen eines Werkstückträgers, Regale, Schaltern 16a - 16c oder Lagerplätze (nicht dargestellt) für Behälter mit Bauteilen oder für benötigte Werkzeuge. Der Steuerungscomputer 14 kann neben dem Display 12, der Kamera 10 und den virtuellen Schaltflächen je nach Anwendungsgebiet Aktionen und IT-Buchungen im Steuerungssystem auszulösen, beliebige Teilsysteme steuern, beispielsweise Fördertechnik zum An- und/oder Abtransportieren von Werkstücken oder Behältern, Sensoren, weitere Kameras, eine Beleuchtung, Heizung oder Klimatisierung, einen Aktuator zum Höhenverstellen des Arbeitstischs 18 oder Stuhls.

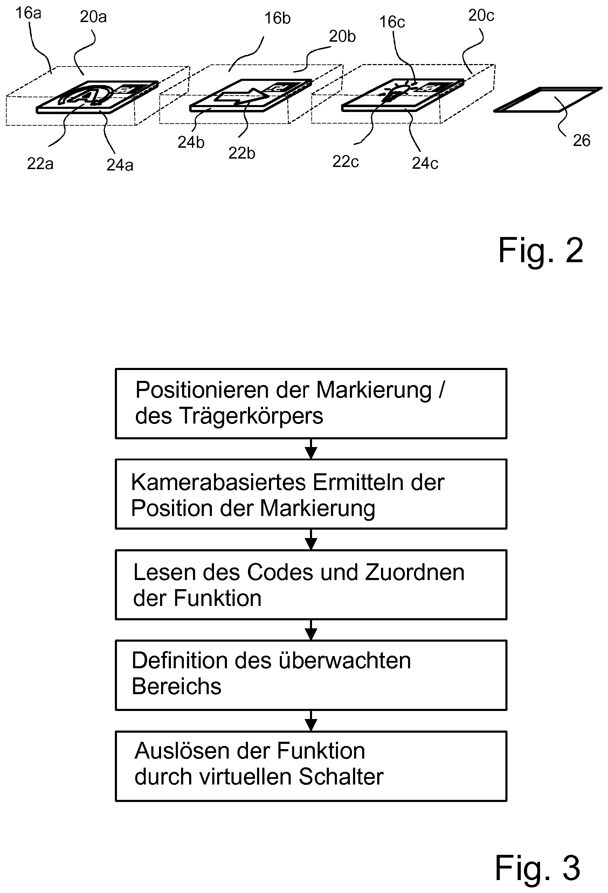

Jeder der virtuellen Schalter 16a - 16c umfasst, wie in Fig. 2 detaillierter dargestellt, einen überwachten Bereich 20a - 20c im Blickfeld der Kamera 10 und eine für einen Benutzer sichtbare Markierung 22a - 22c zum erkennbar machen des überwachten Bereichs 20a - 20c. Der Virtuelle Schalter 16a - 16c ist daher ein Augmented-Reality-Objekt, also eine Kombination aus der Markierung 22a - 22c als physikalische Struktur und dem überwachten Bereich 20a - 20c als quaderförmige Struktur in einem virtuellen Raum. Der Steuerungscomputer 14 ist durch eine entsprechende Software dazu ausgelegt, einen Benutzereingriff in den überwachten Bereich 20a - 20c zu detektieren und eine Aktion oder einen Prozess auszulösen, wenn ein Benutzereingriff detektiert wurde. In dem Ausführungsbeispiel ist die Kamera 10 eine TOF-Kamera mit integrierter 2D-Kamera, die einerseits eine Punktwolke als dreidimensionale Darstellung des Arbeitsplatzes und andererseits ein zweidimensionales Bild ausgibt. Zur Überwachung des Eingriffs in den überwachten Bereich 20a - 20c wird in erster Linie die Punktwolke ausgewertet, wobei das Bild der 2D-Kamera 10 ergänzend zu Klassifizieren der Gegenstände im Blickfeld der Kamera 10 genutzt werden kann.

Die Markierung 22a - 22c ist permanent auf einem Trägerkörper 24a - 24c angebracht bzw. aufgedruckt, der vom Benutzer zwischen mehreren wählbaren Positionen im Blickfeld der Kamera 10 bewegbar ist. Der der Steuerungscomputer 14 ist dazu ausgelegt, die Position der Markierung 22a - 22c aus den Bilddaten zu ermitteln und eine Position des überwachten Bereichs 20a - 20c abhängig von der ermittelten Position der Markierung 22a - 22c zu bestimmen. Der Steuerungscomputer 14 findet die Markierung 22a - 22c mit einem Mustererkennungsalgorithmus im Bild der 2D-Kamera 10 und ermittelt seine Position im Raum durch eine Überlagerung des zweidimensionalen Bilds mit der Punktwolke. Der überwachte Bereich 20a - 20c ist ein quaderförmiger Bereich im dreidimensionalen Raum, dessen untere Seitenfläche der Oberfläche des Trägerkörpers 24a - 24c der Markierung 22a - 22c entspricht, wobei der Trägerkörper 24a - 24c im Wesentlichen mittig zu der unteren Seitenfläche des Trägerkörpers 24a - 24c angeordnet ist.

Die Markierung 22a - 22c umfasst einerseits ein für den Benutzer verständliches Piktogramm oder Symbol und andererseits einen maschinenlesbaren Code, beispielsweise einen QR-Code. Der Steuerungscomputer 14 ist dazu ausgelegt, den Code der Markierung 22a - 22c aus den Bilddaten zu ermitteln und abhängig von dem Code eine dem virtuellen Schalter 16a - 16c zugeordnete Funktion zu bestimmen. Dazu umfasst der Steuerungscomputer 14 eine Zuordnungstabelle oder Datenbank, in der jeder Code einer Funktion zugeordnet ist. Der Steuerungscomputer 14 löst dann eine der Funktion entsprechende Aktion oder einen der Funktion entsprechenden Prozess aus, wenn ein Benutzereingriff in den überwachten Bereich 20a - 20c des virtuellen Schalters 16a - 16c detektiert wurde.

Der Trägerkörper 24a - 24c ist ein Kunststoffplättchen, das, wie in Fig. 2 dargestellt, in Vertiefungen 26 oder andere Befestigungsstrukturen im Arbeitstisch 18 eingelegt werden kann. In dem Beispiel aus Fig. 2 ist eine der Vertiefungen 26 leer. In anderen Ausgestaltungen der Erfindung sind in die Rückseite des Trägerkörpers 24a - 24c Magneten als Mittel zum lösbaren Befestigen des Trägerkörpers 24a - 24c am Arbeitsplatz im Blickfeld der Kamera 10 eingebettet. Wenn der Arbeitstisch 18 ein Stahltisch ist, ist der Trägerkörper 24a - 24c so an einer beliebigen Position befestigbar.

Der Steuerungscomputer 14 verwendet die Markierungen 22a - 22c nicht nur zur Definition der überwachten Bereiche 20a - 20c. Vielmehr kann das System in mehreren Betriebsmodi betrieben werden und der Betriebsmodus kann vom Steuersystem abhängig von aus den Bilddaten detektieren Markierungen 22a - 22c ausgewählt werden.

Wenn beispielsweise, wie in Fig. 2 dargestellt, einer der als Plättchen ausgestalteten Trägerkörper 24a auf einer Seite das Symbol für einen Automatik-Betriebsmodus trägt, auf der anderen Seite aber leer ist, und das System in den Betriebsmodi "Automatik" und "Manuell" betreiben werden kann, kann der Steuerungscomputer 14 die Bilddaten so interpretieren, dass das System unabhängig von einem Benutzereingriff im Betriebsmodus "Automatik" betrieben wird, wenn das Automatiksymbol in den Bilddaten erkannt wird und andernfalls im Betriebsmodus "Manuell". Der Benutzer muss dann zum Umschalten zwischen den Betriebsmodi "Automatik" und "Manuell" lediglich das Plättchen umdrehen oder auf eine andere Weise aus dem Blickfeld der Kamera 10 bewegen. Dabei kann der Steuerungscomputer 14 das das Symbol für den Automatik-Betriebsmodus direkt erkennen oder den zugeordneten QR-Code lesen. In einem anderen Beispiel können sich die Betriebsmodi in der Art der Benutzerführung unterscheiden, **z.B.** in einem mehr oder weniger detaillierten Arbeitsplatzdialog, Versionen, die vom der Erfahrung des Benutzers abhängen ("Skill-Level") oder auch in einer Sprachversion des Arbeitsplatzdialogs. In dem in Fig. 2 dargestellten Ausführungsbeispiel sind der virtuelle Schalter 16b der Funktion "Weiterschalten" und der virtuelle Schalter 16c den Betriebsmodi "Licht an" bzw. "Licht aus" zugeordnet. Der Steuerungscomputer 14 kann auch in diesem Fall erkennen, welche Symbole aufgelegt bzw. aufgedeckt sind und den Betriebsmodus entsprechend wählen.

Auf dem Display 12 als graphische Benutzerschnittstelle für einen Arbeitsplatzdialog stellt der Steuerungscomputer 14 eine Übersicht von über die Benutzerschnittstelle auslösbaren Funktionen dar, wobei Funktionen, die der Steuerungscomputer 14 einem virtuellen Schalter 16a - 16c zugeordnet hat, in der Übersicht ausgeblendet sind. Wenn der Benutzer das der Funktion zugeordnete Plättchen, bzw. den mit der Markierung 22a - 22c bedruckten Trägerkörper 24a - 24c, auf dem Arbeitsplatz positioniert hat, definiert der Steuerungscomputer 14 wie oben beschrieben einen entsprechenden virtuellen Schalter 16a - 16c für die Funktion und die Funktion verschwindet aus der Übersicht auf dem Display 12. Umgekehrt erscheint die Funktion wieder in der Übersicht, wenn der Benutzer das Plättchen entfernt und der Steuerungscomputer 14 die Überwachung des entsprechenden Bereichs 20a - 20c beendet.

Um neue Funktionen virtuellen Schaltflächen zuordnen zu können kann das System in einem Teaching-Betriebsmodus betrieben werden, in dem der Benutzer eine Markierung 22a - 22c mit einer Funktion verknüpfen kann.

Fig. 3 zeigt ein Ablaufdiagramm eines computergestützten Verfahrens zum Erstellen eines virtuellen Schalters 16a - 16c in einem System der oben beschriebenen Art. In einem ersten Schritt positioniert der Benutzer einen der Trägerkörpers 24a - 24c in einer von mehreren wählbaren Positionen im Blickfeld der Kamera 10. In einem zweiten Schritt wird die Position der Markierung 22a - 22c durch den Steuerungscomputer 14 aus den Bilddaten der Kamera 10 ermittelt. In einem dritten Schritt wird der QR-Code (oder AR-Marker) der Markierung 22a - 22c aus den Bilddaten ermittelt und eine dem QR-Code zugeordnete Funktion aus einer Zuordnungstabelle gelesen. In einem vierten Schritt wird die Position und/oder Größe des überwachten Bereichs 20a - 20c abhängig von der ermittelten Position der Markierung 22a - 22c durch den Steuerungscomputer 14 definiert und der so gebildete virtuelle Schalter 16a - 16c der abhängig vom QR-Code bestimmten Funktion zugeordnet.

## Patentansprüche

1. Fertigungs- oder Logistikarbeitsplatz mit wenigstens einer Kamera (10), einem Steuerungscomputer (14) zum Auswerten der von der Kamera (10) erfassten Bilddaten und zum Steuern
a. einer Maschine,
b. einer Fördertechnik zum An- und/oder Abtransportieren von Werkstücken oder
c. eines Arbeitsplatzdialogs und mit wenigstens einem virtuellen Schalter (16a - 16c), wobei der virtuelle Schalter (16a - 16c) einen überwachten Bereich (20a - 20c) im Blickfeld der Kamera (10) und eine für einen Benutzer sichtbare Markierung (22a - 22c) zum erkennbar machen des überwachten Bereichs (20a - 20c) umfasst, und der Steuerungscomputer (14) dazu ausgelegt ist, einen Benutzereingriff in den überwachten Bereich (20a - 20c) zu detektieren und eine Aktion oder einen Prozess auszulösen, wenn ein Benutzereingriff detektiert wurde, wobei der Prozess die Steuerung der Maschine, der Fördertechnik oder des Arbeitsplatzdialogs betrifft,
wobei
die Markierung (22a - 22c) permanent auf einem Trägerkörper (24a - 24c) angebracht ist, der vom Benutzer zwischen mehreren wählbaren Positionen im Blickfeld der Kamera (10) bewegbar ist und der Steuerungscomputer (14) dazu ausgelegt ist, die Position der Markierung (22a - 22c) aus den Bilddaten zu ermitteln und eine Position und/oder Größe des überwachten Bereichs (20a - 20c) abhängig von der ermittelten Position der Markierung (22a - 22c) zu bestimmen, **dadurch gekennzeichnet, dass** die Kamera eine 3D- oder Time-of-Flight (TOF)- Kamera ist und der überwachte Bereich (20a - 20c) ein quaderförmiger Bereich im dreidimensionalen Raum ist.

2. Fertigungs- oder Logistikarbeitsplatz nach Anspruch 1,
**dadurch gekennzeichnet, dass**
die Markierung (22a - 22c) ein maschinenlesbares Symbol oder einen maschinenlesbaren Code und/oder ein für den Benutzer les- und interpretierbares Symbol umfasst und der Steuerungscomputer (14) dazu ausgelegt ist, das Symbol oder den Code der Markierung (22a - 22c) aus den Bilddaten zu ermitteln, abhängig von dem ermittelten Symbol oder Code eine dem virtuellen Schalter (16a - 16c) zugeordnete Funktion zu bestimmen und eine der Funktion entsprechende Aktion oder einen der Funktion entsprechenden Prozess Signal auszulösen, wenn ein Benutzereingriff in den überwachten Bereich (20a - 20c) des virtuellen Schalters (16a - 16c) detektiert wurde.

3. Fertigungs- oder Logistikarbeitsplatz nach Anspruch 1 oder 2,
**dadurch gekennzeichnet, dass**
der Trägerkörper (24a - 24c) an seiner Rückseite Mittel zum lösbaren Befestigen des Trägerkörpers (24a - 24c) an einer Konsole oder einem Arbeitsplatz im Blickfeld der Kamera (10) umfasst.

4. Fertigungs- oder Logistikarbeitsplatz nach einem der Ansprüche 1 bis 3,
**dadurch gekennzeichnet, dass**
die Mittel zum lösbaren Befestigen des Trägerkörpers (24a - 24c) einen Magneten oder einen Klettverschluss umfassen.

5. Fertigungs- oder Logistikarbeitsplatz nach einem der vorhergehenden Ansprüche,
**gekennzeichnet durch**
eine Konsole oder einen Arbeitsplatz mit Befestigungsstrukturen zum lösbaren Befestigen des Trägerkörpers (24a - 24c).

6. Fertigungs- oder Logistikarbeitsplatz nach einem der vorhergehenden Ansprüche,
**dadurch gekennzeichnet, dass**
der Steuerungscomputer (14) dazu ausgelegt ist, das System in mehreren Betriebsmodi zu betreiben und den Betriebsmodus abhängig von aus den Bilddaten detektieren Markierungen (22a - 22c) auszuwählen.

7. Fertigungs- oder Logistikarbeitsplatz nach einem der vorhergehenden Ansprüche nach einem der vorhergehenden Ansprüche,
**gekennzeichnet durch**
eine graphische Benutzerschnittstelle für einen Arbeitsplatzdialog, wobei der Steuerungscomputer (14) dazu ausgelegt ist eine Übersicht von über die Benutzerschnittstelle auslösbaren Funktionen darzustellen, wobei Funktionen, die der Steuerungscomputer (14) einem virtuellen Schalter (16a - 16c) zugeordnet hat, in der Übersicht ausgeblendet sind.

8. Fertigungs- oder Logistikarbeitsplatz nach einem der vorhergehenden Ansprüche,
**dadurch gekennzeichnet, dass**
der Steuerungscomputer (14) dazu ausgelegt ist, das System in einem Teaching-Betriebsmodus zu betreiben, in dem der Benutzer eine Markierung (22a - 22c) mit einer Funktion verknüpfen kann.

9. Computergestütztes Verfahren zum Erstellen eines virtuellen Schalters (16a - 16c) für einen Fertigungs- oder Logistikarbeitsplatz mit wenigstens einer Kamera (10) und einem Steuerungscomputer (14) zum Auswerten der von der Kamera (10) erfassten Bilddaten und zum Steuern
a. einer Maschine,
b. einer Fördertechnik zum An- und/oder Abtransportieren von Werkstücken oder
c. eines Arbeitsplatzdialogs, wobei der virtuelle Schalter (16a - 16c) einen überwachten Bereich (20a - 20c) im Blickfeld der Kamera (10) und eine für einen Benutzer sichtbare Markierung (22a - 22c) zum erkennbar machen des überwachten Bereichs (20a - 20c) umfasst, und der Steuerungscomputer (14) dazu ausgelegt ist, einen Benutzereingriff in den überwachten Bereich (20a - 20c) zu detektieren und einen Prozess auszulösen, wenn ein Benutzereingriff detektiert wurde, wobei der Prozess die Steuerung der Maschine, der Fördertechnik oder des Arbeitsplatzdialogs betrifft,
wobei
das Verfahren die folgenden Schritte umfasst:
- Positionieren eines Trägerkörpers (24a - 24c) mit permanent darauf angebrachter Markierung (22a - 22c) in einer von mehreren wählbaren Positionen im Blickfeld der Kamera (10) durch einen Benutzer;
- Ermitteln der Position der Markierung (22a - 22c) aus den Bilddaten durch den Steuerungscomputer (14); und
- Bestimmen einer Position und/oder Größe des überwachten Bereichs (20a - 20c) abhängig von der ermittelten Position der Markierung (22a - 22c) durch den Steuerungscomputer (14),
**dadurch gekennzeichnet, dass** die Kamera eine 3D- oder Time-of-Flight (TOF)- Kamera ist und der überwachte Bereich (20a - 20c) ein quaderförmiger Bereich im dreidimensionalen Raum ist.

10. Verfahren nach Anspruch 9,
**dadurch gekennzeichnet, dass**
die Markierung (22a - 22c) ein maschinenlesbares Symbol oder einen maschinenlesbaren Code und/oder ein für den Benutzer les- und interpretierbares Symbol umfasst und das Verfahren ferner die Folgenden Schritte umfasst:
- Ermitteln des Symbols oder des Codes der Markierung (22a - 22c) aus den Bilddaten;
- Bestimmen einer dem virtuellen Schalter (16a - 16c) zugeordnete Funktion abhängig von dem ermittelten Symbol oder Code; und
- Auslösen eines der Funktion entsprechenden Signals, wenn ein Benutzereingriff in den überwachten Bereich (20a - 20c) des virtuellen Schalters (16a - 16c) detektiert wurde.

## Claims

1. A manufacturing or logistics workplace with at least one camera (10), a control computer (14) for evaluating the image data captured by the camera (10) and for controlling
a. a machine,
b. a conveyor system for transporting workpieces to and/or from the workplace, or
c. a workplace dialog,
and with at least one virtual switch (16a - 16c), wherein the virtual switch (16a - 16c) comprises a monitored area (20a - 20c) in the field of view of the camera (10) and a marking (22a - 22c) visible to a user for making the monitored area (20a - 20c) recognizable, and the control computer (14) is configured to detect a user intervention in the monitored area (20a - 20c) and to trigger an action or a process when a user intervention is detected, wherein the process concerns the control of the machine, the conveyor system or the workplace dialog, wherein the marking (22a - 22c) is permanently attached to a carrier body (24a - 24c), which can be moved by the user between several selectable positions in the field of view of the camera (10) and the control computer (14) is configured to determine the position of the marking (22a - 22c) from the image data and to determine a position and/or size of the monitored area (20a - 20c) depending on the determined position of the marking (22a - 22c), **characterized in that** the camera is a 3D or Time-of-Flight (TOF) camera and the monitored area (20a - 20c) is a cuboid-shaped area in three-dimensional space.

2. A manufacturing or logistics workplace according to claim 1, **characterized in that** the marking (22a - 22c) comprises a machine-readable symbol or a machine-readable code and/or a symbol that can be read and interpreted by the user, and the control computer (14) is configured to determine the symbol or the code of the marking (22a - 22c) from the image data, to determine a function assigned to the virtual switch (16a - 16c) depending on the determined symbol or code, and to trigger an action corresponding to the function or a signal corresponding to the function when a user intervention in the monitored area (20a - 20c) of the virtual switch (16a - 16c) is detected.

3. A manufacturing or logistics workplace according to claim 1 or 2, **characterized in that** the carrier body (24a - 24c) comprises means for detachably fastening the carrier body (24a - 24c) to a console or a workplace in the field of view of the camera (10) on its back side.

4. A manufacturing or logistics workplace according to one of claims 1 to 3, **characterized in that** the means for detachably fastening the carrier body (24a - 24c) comprise a magnet or a hook and loop fastener.

5. A manufacturing or logistics workplace according to one of the preceding claims, **characterized by** a console or a workplace with fastening structures for detachably fastening the carrier body (24a - 24c).

6. A manufacturing or logistics workplace according to one of the preceding claims, **characterized in that** the control computer (14) is configured to operate the system in multiple operating modes and to select the operating mode depending on markings (22a - 22c) detected from the image data.

7. A manufacturing or logistics workplace according to one of the preceding claims, **characterized by** a graphical user interface for a workplace dialog, wherein the control computer (14) is configured to display an overview of functions that can be triggered via the user interface, wherein functions that the control computer (14) has assigned to a virtual switch (16a - 16c) are hidden in the overview.

8. A manufacturing or logistics workplace according to one of the preceding claims, **characterized in that** the control computer (14) is configured to operate the system in a teaching operating mode in which the user can link a marking (22a - 22c) with a function.

9. A computer-implemented method for creating a virtual switch (16a - 16c) for a manufacturing or logistics workplace with at least one camera (10) and a control computer (14) for evaluating the image data captured by the camera (10) and for controlling
a. a machine,
b. a conveyor system for transporting workpieces to and/or from the workplace, or
c. a workplace dialog,
wherein the virtual switch (16a - 16c) comprises a monitored area (20a - 20c) in the field of view of the camera (10) and a marking (22a - 22c) visible to a user for making the monitored area (20a - 20c) recognizable, and the control computer (14) is configured to detect a user intervention in the monitored area (20a - 20c) and to trigger a process when a user intervention is detected, wherein the process concerns the control of the machine, the conveyor system or the workplace dialog, wherein the method comprises the following steps:
positioning a carrier body (24a - 24c) with a marking (22a - 22c) permanently attached to it in one of several selectable positions in the field of view of the camera (10) by a user;
determining the position of the marking (22a - 22c) from the image data by the control computer (14); and
determining a position and/or size of the monitored area (20a - 20c) depending on the determined position of the marking (22a - 22c) by the control computer (14),
**characterized in that** the camera is a 3D or Time-of-Flight (TOF) camera and the monitored area (20a - 20c) is a cuboid-shaped area in three-dimensional space.

10. A method according to claim 9, **characterized in that** the marking (22a - 22c) comprises a machine-readable symbol or a machine-readable code and/or a symbol that can be read and interpreted by the user, and the method further comprises the following steps:
determining the symbol or the code of the marking (22a - 22c) from the image data;
determining a function assigned to the virtual switch (16a - 16c) depending on the determined symbol or code; and triggering a signal corresponding to the function when a user intervention in the monitored area (20a - 20c) of the virtual switch (16a - 16c) is detected.

## Revendications

1. Poste de travail de fabrication ou de logistique comprenant au moins une caméra (10), un ordinateur de commande (14) pour évaluer les données d'image capturées par la caméra (10) et pour commander
a. une machine,
b. un système de convoyage pour transporter des pièces vers et/ou depuis le poste de travail, ou
c. un dialogue de poste de travail,
et avec au moins un commutateur virtuel (16a - 16c), dans lequel le commutateur virtuel (16a - 16c) comprend une zone surveillée (20a - 20c) dans le champ de vision de la caméra (10) et un marquage (22a - 22c) visible pour un utilisateur pour rendre reconnaissable la zone surveillée (20a - 20c), et l'ordinateur de commande (14) est configuré pour détecter une intervention d'utilisateur dans la zone surveillée (20a - 20c) et pour déclencher une action ou un processus lorsqu'une intervention d'utilisateur est détectée, dans lequel le processus concerne la commande de la machine, du système de convoyage ou du dialogue de poste de travail, dans lequel le marquage (22a - 22c) est fixé de façon permanente sur un corps porteur (24a - 24c), qui peut être déplacé par l'utilisateur entre plusieurs positions sélectionnables dans le champ de vision de la caméra (10) et l'ordinateur de commande (14) est configuré pour déterminer la position du marquage (22a - 22c) à partir des données d'image et pour déterminer une position et/ou une taille de la zone surveillée (20a - 20c) en fonction de la position déterminée du marquage (22a - 22c), **caractérisé en ce que** la caméra est une caméra 3D ou Time-of-Flight (TOF) et la zone surveillée (20a - 20c) est une zone de forme cubique dans l'espace tridimensionnel.

2. Poste de travail de fabrication ou de logistique selon la revendication 1, **caractérisé en ce que** le marquage (22a - 22c) comprend un symbole lisible par machine ou un code lisible par machine et/ou un symbole qui peut être lu et interprété par l'utilisateur, et l'ordinateur de commande (14) est configuré pour déterminer le symbole ou le code du marquage (22a - 22c) à partir des données d'image, pour déterminer une fonction attribuée au commutateur virtuel (16a - 16c) en fonction du symbole ou du code déterminé, et pour déclencher une action correspondant à la fonction ou un signal correspondant à la fonction lorsqu'une intervention d'utilisateur dans la zone surveillée (20a - 20c) du commutateur virtuel (16a - 16c) est détectée.

3. Poste de travail de fabrication ou de logistique selon la revendication 1 ou 2, **caractérisé en ce que** le corps porteur (24a - 24c) comprend des moyens pour fixer de manière détachable le corps porteur (24a - 24c) à une console ou à un poste de travail dans le champ de vision de la caméra (10) sur sa face arrière.

4. Poste de travail de fabrication ou de logistique selon l'une des revendications 1 à 3, **caractérisé en ce que** les moyens pour fixer de manière détachable le corps porteur (24a - 24c) comprennent un aimant ou une fermeture à crochets et boucles.

5. Poste de travail de fabrication ou de logistique selon l'une des revendications précédentes, **caractérisé par** une console ou un poste de travail avec des structures de fixation pour fixer de manière détachable le corps porteur (24a - 24c).

6. Poste de travail de fabrication ou de logistique selon l'une des revendications précédentes, **caractérisé en ce que** l'ordinateur de commande (14) est configuré pour faire fonctionner le système dans plusieurs modes de fonctionnement et pour sélectionner le mode de fonctionnement en fonction des marquages (22a - 22c) détectés à partir des données d'image.

7. Poste de travail de fabrication ou de logistique selon l'une des revendications précédentes, **caractérisé par** une interface utilisateur graphique pour un dialogue de poste de travail, dans lequel l'ordinateur de commande (14) est configuré pour afficher un aperçu des fonctions qui peuvent être déclenchées via l'interface utilisateur, dans lequel les fonctions que l'ordinateur de commande (14) a attribuées à un commutateur virtuel (16a - 16c) sont masquées dans l'aperçu.

8. Poste de travail de fabrication ou de logistique selon l'une des revendications précédentes, **caractérisé en ce que** l'ordinateur de commande (14) est configuré pour faire fonctionner le système dans un mode de fonctionnement d'apprentissage dans lequel l'utilisateur peut lier un marquage (22a - 22c) à une fonction.

9. Procédé assisté par ordinateur pour créer un commutateur virtuel (16a - 16c) pour un poste de travail de fabrication ou de logistique avec au moins une caméra (10) et un ordinateur de commande (14) pour évaluer les données d'image capturées par la caméra (10) et pour commander
a. une machine,
b. un système de convoyage pour transporter des pièces vers et/ou depuis le poste de travail, ou
c. un dialogue de poste de travail,
dans lequel le commutateur virtuel (16a - 16c) comprend une zone surveillée (20a - 20c) dans le champ de vision de la caméra (10) et un marquage (22a - 22c) visible pour un utilisateur pour rendre reconnaissable la zone surveillée (20a - 20c), et l'ordinateur de commande (14) est configuré pour détecter une intervention d'utilisateur dans la zone surveillée (20a - 20c) et pour déclencher un processus lorsqu'une intervention d'utilisateur est détectée, dans lequel le processus concerne la commande de la machine, du système de convoyage ou du dialogue de poste de travail, dans lequel le procédé comprend les étapes suivantes:
positionner un corps porteur (24a - 24c) avec un marquage (22a - 22c) fixé de façon permanente sur celui-ci dans l'une des plusieurs positions sélectionnables dans le champ de vision de la caméra (10) par un utilisateur;
déterminer la position du marquage (22a - 22c) à partir des données d'image par l'ordinateur de commande (14); et
déterminer une position et/ou une taille de la zone surveillée (20a - 20c) en fonction de la position déterminée du marquage (22a - 22c) par l'ordinateur de commande (14),
**caractérisé en ce que** la caméra est une caméra 3D ou Time-of-Flight (TOF) et la zone surveillée (20a - 20c) est une zone de forme cubique dans l'espace tridimensionnel.

10. Procédé selon la revendication 9, **caractérisé en ce que** le marquage (22a - 22c) comprend un symbole lisible par machine ou un code lisible par machine et/ou un symbole qui peut être lu et interprété par l'utilisateur, et le procédé comprend en outre les étapes suivantes:
déterminer le symbole ou le code du marquage (22a - 22c) à partir des données d'image;
déterminer une fonction attribuée au commutateur virtuel (16a - 16c) en fonction du symbole ou du code déterminé; et
déclencher un signal correspondant à la fonction lorsqu'une intervention d'utilisateur dans la zone surveillée (20a - 20c) du commutateur virtuel (16a - 16c) est détectée.
